Europäisches Patentamt

European Patent Office

Office européen des brevets

(11) Veröffentlichungsnummer: **0 317 703 B1**

(19)

(12) **EUROPÄISCHE PATENTSCHRIFT**

(45) Veröffentlichungstag der Patentschrift: **29.04.92**

(51) Int. Cl.⁵: **F01P 7/08**

(21) Anmeldenummer: **88110361.8**

(22) Anmeldetag: **29.06.88**

(54) **Elektromagnetisch betätigbare Reibscheibenkupplung.**

(30) Priorität: **21.11.87 DE 3739537**

(43) Veröffentlichungstag der Anmeldung:
**31.05.89 Patentblatt 89/22**

(45) Bekanntmachung des Hinweises auf die
Patenterteilung:
**29.04.92 Patentblatt 92/18**

(84) Benannte Vertragsstaaten:
**DE ES FR GB IT**

(56) Entgegenhaltungen:
DE-A- 1 500 444       DE-A- 3 203 143
DE-A- 3 443 523       DE-A- 3 612 167
FR-A- 2 087 665       FR-A- 2 217 998

(73) Patentinhaber: **Linnig, Karl-Heinz**
**Kapitän Wagnerstrasse 34**
**W-7990 Friedrichshafen(DE)**

(72) Erfinder: **Linnig, Karl-Heinz**
**Kapitän Wagnerstrasse 34**
**W-7990 Friedrichshafen(DE)**

(74) Vertreter: **Patentanwälte Dipl.-Ing. E. Eisele**
**Dr.-Ing. H. Otten**
**Seestrasse 42**
**W-7980 Ravensburg(DE)**

Rank Xerox (UK) Business Services
(−/2.18/2.0)

## Beschreibung

Die Erfindung betrifft eine elektromagnetisch betätigbare Reibscheibenkupplung für das Lüfterrad eines Ventilators, insbesondere von Kraftfahrzeug-Verbrennungsmotoren nach dem Oberbegriff des Anspruchs 1.

Aus der deutschen Patentanmeldung DE 32 03 143 ist eine elektromagnetisch betätigbare Reibscheibenkupplung für das Lüfterrad eines Ventilators, insbesondere von Kraftfahrzeug-Verbrennungsmotoren bekannt geworden, bei welchem das Lüfterrad bei abgeschalteter Reibscheibenkupplung durch eine zweite, als Wirbelstromkupplung ausgebildete Kupplungsvorrichtung mitgeschleppt wird. Dabei ist die Antriebswelle mit einem elektrisch leitenden Läuferrad und das frei umlaufende Lüfterrad mit einem Permanentmagneten der Wirbelstromkupplung verbunden.

Aufgabe und Ziel der bekannten Reibscheibenkupplung ist es, das Lüfterrad eines Ventilators, insbesondere eines Kraftfahrzeugmotors, auch bei abgeschaltetem Ventilatorantrieb über eine elektromagnetisch betätigbare Reibscheibenkupplung mit einer gewissen Mindestschleppdrehzahl weiter zu bewegen, um die Kühlung von im Motorraum befindlichen elektronischen Bauelementen zu gewährleisten. Das Lüfterrad des Ventilators kann demnach über eine elektromagnetisch betätigbare Reibscheibenkupplung auf die Drehzahl der Antriebswelle, d. h. auf die Motordrehzahl angetrieben oder, bei abgeschalteter elektromagnetischer Reibscheibenkupplung auf eine maximale Schleppdrehzahl, bestimmt durch die Wirbelstromkupplung, angetrieben werden. Diese Schleppdrehzahl liegt bei der bekannten Anordnung in der Größenordnung von ca. 1.100 U/Min. Sie kann durch die Anzahl der Permanentmagnete sowie durch den Abstand zwischen Läufer und Permanentmagneten geregelt werden.

Bei dieser bekannten Anordnung wurde bisweilen auch die Möglichkeit in Betracht gezogen, die Wirbelstromkupplung in besonderen Fällen ganz von der Antriebswelle abzukuppeln, was über eine zweite elektromagnetisch betätigbare Reibscheibenkupplung oder über eine sonstige Kupplungseinrichtung geschehen kann.

Bei einer weiteren, der Anmelderin bekannten Einrichtung ist der Antriebsflansch für die Wirbelstromkupplung z. B. mittels eines Kugellagers auf der motorangetriebenen Antriebswelle drehbar gelagert, wobei dieser Antriebsflansch über eine zweite elektromagnetische Reibscheibenkupplung mit der Antriebswelle verbunden ist. Die unmittelbare Verbindung der Antriebswelle mit dem Lüfterrad erfolgt dabei analog zur oben genannten Veröffentlichung DE 32 03 143. Hierbei ist es notwendig, daß auf dem Antriebsflansch für die Wirbelstromkupplung ein weiteres Kugellager angeordnet ist, welches den Ankerring der ersten elektromagnetischen Reibscheibenkupplung und die Lüfterradnabe und das damit verbundene Lüfterrad trägt.

Bei ausgeschalteter erster und zweiter Reibscheibenkupplung wird das Lüfterrad der bekannten Kupplungsanordnung lediglich über die Reibung des zwischen Antriebsflansch für die Wirbelstromkupplung und Antriebswelle liegenden inneren Kugellagers angetrieben, wobei sich eine Leerlaufdrehzahl von ca. 80 U/Min. einstellt. Diese Weiterentwicklung der Vorrichtung gemäß DE 32 03 143 hat demnach den Vorteil, daß die Schleppdrehzahl durch Auftrennung der unmittelbaren Verbindung zwischen der Wirbelstromkupplung und der Antriebswelle noch weiter reduziert werden kann. Daraus ergeben sich drei einstellbare Lüfterdrehzahlen für das Lüfterrad.

Die beschriebene Weiterentwicklung hat jedoch den Nachteil, daß wenigstens zwei übereinanderliegende Kugellager oder nebeneinanderliegende Kugellagerpaare benötigt werden, die den Antriebsflansch für die Wirbelstromkupplung zwischen sich als drehbaren Anschlußflansch einschließen. Der Arbeitsluftspalt an der Wirbelstromkupplung liegt beispielweise in der Größenordnung von 0,8 mm. Eine Luftspaltveränderung wirkt sich unmittelbar auf die Drehmomentsübertragung einer Wirbelstromkupplung aus, so daß geringe Abweichungen des Luftspalts erhebliche Drehmomentsänderungen zur Folge haben.

Bei der Verwendung von hochwertigen, sehr starken Magneten für den Permanentmagneten der Wirbelstromkupplung spielen Luftspaltänderungen ebenfalls eine große Rolle. Hieraus ergibt sich, daß die Verwendung von zwei übereinanderliegenden Kugellagern, ggf. von zwei übereinanderliegenden Kugellagerpaaren (jeweils zwei nebeneinanderliegende Kugellager) ein großes Maß an Toleranzeinhaltung erfordern, insbesondere auch im Hinblick auf den dazwischen liegenden Antriebsflansch für die Wirbelstromkupplung. Nachteilig an der bekannten Weiterentwicklung ist weiterhin, daß übereinanderliegende Kugellagerpaare auch einen großen Platzbedarf haben, was die gesamte elektromagnetisch betätigbare Reibscheibenkupplung in ihren Abmaßen stark vergrößert. Weiterhin ergibt sich bei mehreren Einzelkugellagern die Möglichkeit einer durch ungenaue Fertigung sich einstellenden Verspannungen, was zu einem vorzeitigen Verschleiß und zu einer unbefriedigenden Kupplungstätigkeit führt.

Der Erfindung liegt die Aufgabe zugrunde, die zuvor genannten Nachteile zu beseitigen, und eine elektromagnetisch betätigbare Reibscheibenkupplung zu schaffen, die möglichst einfach aufgebaut und mit geringeren Toleranzen herstellbar ist. Dabei sollen insbesondere drei verschiedene Drehzahlen des Lüfterrads des Ventilators einstellbar sein.

Diese Aufgabe wird ausgehend von einer elektromagnetisch betätigbaren Reibscheibenkupplung der einleitend bezeichnenden Art erfindungsgemäß durch die kennzeichnenden Merkmale des Anspruchs 1 gelöst.

Durch die in den Unteransprüchen aufgeführten Maßnahmen sind vorteilhafte Weiterbildungen und Verbesserungen der Reibscheibenkupplung nach dem Anspruch 1 möglich.

Die erfindungsgemäße elektromagnetisch betätigbare Reibscheibenkupplung wird durch die kennzeichnenden Merkmale des Anspruchs 1 gegenüber der bekannten Lösung entscheidend verbessert. Mittels des speziellen, einstückigen Stufenkugellagers wird sowohl eine Lagerung der Kupplungsteile als auch der Antrieb des Läufers der Wirbelstromkupplung bewerkstelligt. Dabei dient insbesondere der Zwischenring zwischen innerem und äußerem Kugellager zusätzlich als Antriebsflansch zwischen der zweiten elektromagnetischen Reibscheibenkupplung und der Wirbelstromkupplung. Der gemeinsame Außenring für das innere und Innenring für das äußere Kugellager hat demnach mehrere Spezialfunktionen. Hierdurch entfällt ein separater Antriebsflansch für die Wirbelstromkupplung, was zu einer Kosteneinsparung führt. Durch das einteilige bzw. einstückige Bauteil Stufenkugellager entfallen auch die sonst notwendigen, mit äußerst niedrigen Toleranzen herzustellenden Passungen für eine Reihe von üblichen Kugellagern, die in ihren Toleranzen ebenfalls streuen. Durch die gemeinsame Verwendung des Zwischenrings als Antriebsflansch für die Wirbelstromkupplung und als Außen-und Innenring für das Stufenkugellager, wird erheblich Platz und Gewicht gespart. Weiterhin können keinerlei Verspannungen auftreten, d. h. die Anordnung ist hinsichtlich der Lagerung spannungsfrei.

Gemäß Unteranspruch 2 ist das einstückige Stufenkugellager aus zwei übereinanderliegenden, zweireihigen Schrägkugellagern aufgebaut, wodurch die Vorteile von üblichen zweireihigen Schrägkugellagern hinsichtlich der Kraft- und Momentenaufnahme gewährleistet sind.

Gemäß Unteranspruch 3 bildet der Zwischenring des Stufenkugellagers die Verbindung der zweiten elektromagnetischen Reibscheibenkupplung zur Wirbenstromkupplung und der Außenring die Lagerung der Lüfterradnabe mit Permanentmagneten der Wirbelstromkupplung. Nach Unteranspruch 4 ist die Lüfterradnabe mit dem Ankerring der ersten Reibscheibenkupplung verbunden.

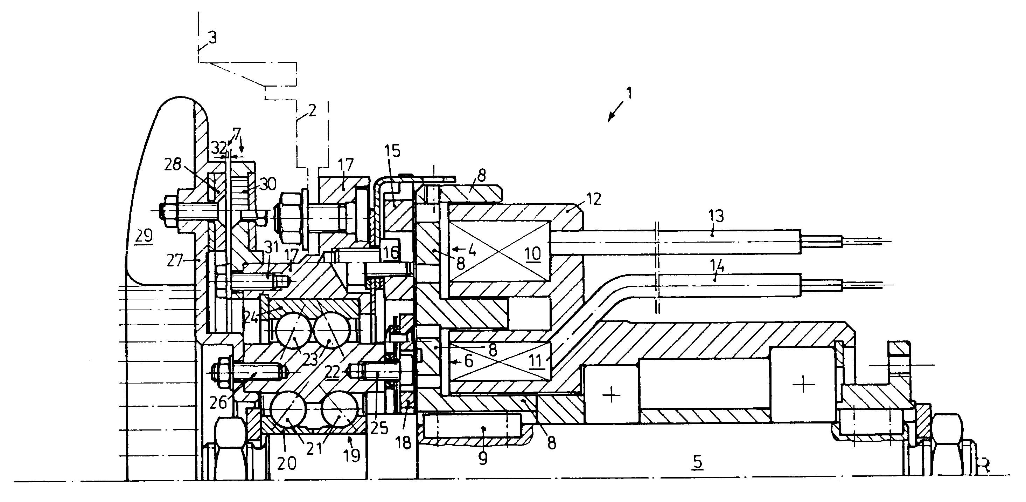

Ein vorteilhaftes und zweckmäßiges Ausführungsbeispiel ist in der Figur dargestellt und in der Beschreibung unter Angabe weiterer erfindungswesentlicher Einzelheiten beschrieben. Die Figur zeigt eine Seitenansicht der erfindungsgemäßen elektromagnetisch betätigbaren Reibscheibenkupplung im Längsschnitt.

Die Wirkungsweise und der Aufbau einer elektromagnetisch betätigbaren Reibscheibenkupplung zum Antrieb eines Lüfterrads eines Ventilators ist in der eingangs erwähnten DE 32 03 143 oder im deutschen Gebrauchsmuster GM 81 09 726 des Anmelders ausführlichst beschrieben. Auf diese Veröffentlichungen wird ergänzend ausdrücklich Bezug genommen.

Die elektromagnetisch betätigbare Reibscheibenkupplung 1 zum Antrieb eines Lüfterrads 2 eines Ventilators 3 von Kraftfahrzeug-Verbrennungsmotoren besteht aus einer ersten elektromagnetischen Reibscheibenkupplung 4 zur direkten Übertragung der auf die Antriebswelle 5 übertragenen Motordrehzahl auf den Lüfterflügel 2. Eine zweite elektromagnetische Reibscheibenkupplung 6 überträgt die Motordrehzahl der Antriebswelle 5 auf eine Wirbelstromkupplung 7, zur Erzeugung einer niedrigeren Schleppdrehzahl des Lüfterrads 2.

Die radial übereinanderliegenden erste und zweite Reibscheibenkupplungen 4, 6 weisen einen gemeinsamen umlaufenden Rotor 8 auf, der über die Paßfeder 9 mit der Antriebswelle 5 drehfest verbunden ist. Die beiden Erregerwicklungen 10, 11 der elektromagnetischen Reibscheibenkupplungen 4, 6 sind von einem gemeinsamen ortsfesten Stator 12 umgeben. Die Stromanschlüsse sind mit 13 und 14 bezeichnet.

Die obere, erste elektromagnetische Reibscheibenkupplung 4 weist einen Ankerring 15 auf, der bei eingeschalteter elektromagnetischer Reibscheibenkupplung 4, d. h. bei Strombeaufschlagung der Erregerwicklung 10 gegen den Rotor 8 gezogen wird und damit dessen, durch die Antriebswelle 5 bestimmten Drehzahl annimmt. Dieser Ankerring 15 ist über eine Schraubverbindung 16 mit der Lüfterradnabe 17 verbunden. Bei eingeschalteter erster elektromagnetischer Reibscheibenkupplung 4 wird demnach die Motordrehzahl über die Antriebswelle 5, den Rotor 8, den Ankerring 15 und der Lüfterradnabe 17 direkt auf das Lüfterrad 2 übertragen. Dies entspricht insoweit der Anordnung nach der DE 32 03 143.

Die zweite elektromagnetische Reibscheibenkupplung 6 weist einen zugehörigen Ankerring 18 auf, der bei eingeschalteter elektromagnetischer Reibscheibenkupplung 6, d. h. bei Stromzuführung auf die Erregerwicklung 11, an den mit der Antriebswelle 5 umlaufenden Rotor 8 angezogen wird.

Erfindungsgemäß ist ein spezielles einstückiges Stufenkugellager 19 vorgesehen, bestehend aus einem auf der Antriebswelle 5 angeordneten Innenring 20 für ein radial innenliegendes Kugellager 21, bestehend aus einem Zwischenring 22, welches den Außenring für das innere Kugellager 21 und den Innenring für ein äußeres Kugellager 23 bildet. Das Stufenkugellager 19 wird außen durch einen Außenring 24 begrenzt, auf dem die Lüfterradnabe 17 umläuft.

Der Zwischenring 22 des speziellen Stufenkugellagers 19 ist gleichzeitig als Antriebsflansch 22 mit Schraubanschlüssen 25, 26 ausgebildet. Der Ankerring 18 der zweiten elektromagnetischen Reibscheibenkupplung 6 ist über den Schraubanschluß 25 an den Zwischenring 22 des Stufenkugellagers 19 befestigt. Auf der gegenüberliegenden, vorderen Seite des Zwischenrings 22 ist mittels der Schraubverbindung 26 ein Anschlußflansch 27 befestigt, der den elektrisch leitenden Läufer 28 der Wirbelstromkupplung 7 trägt. Gleichzeitig ist der Anschlußflansch 27 im vorderen Bereich als Flügel 29 zur zusätzlichen Kühlung der Wirbelstromkupplung 7 ausgebildet. Der Permanentmagnet 30 der Wirbelstromkupplung 7, mit beispielsweise vier bis zehn Einzelsegmenten wechselnder Polarität, ist über die Schraubverbindung 31 mit der Lüfterradnabe 17 verbunden. Zwischen dem Läufer 28 und dem Permanentmagneten 30 der Wirbelstromkupplung 7 ist der möglichst genau einzuhaltende Luftspalt 32 zur Übertragung eines Drehmoments für eine Schleppdrehzahl des Lüfterrads 2 einzuhalten.

Die erfindungsgemäße Reibscheibenkupplung arbeitet wie folgt: Bei nichteingeschalteter erster (4) und zweiter (6) elektromagnetischer Reibscheibenkupplung läuft der Rotor 8 mit der Motordrehzahl durch die starre Verbindung 9 zur Antriebswelle 5, ohne daß die Ankerringe 15, 18 der beiden Reibscheibenkupplungen 4, 6 mitgenommen werden. Gleichermaßen läuft der auf der Antriebswelle 5 gelagerte Innenring 20 des Stufenkugellagers 19 mit Motordrehzahl und bewirkt über die Reibung des inneren Kugellagers 21 eine Mitnahme des Zwischenrings 22, der als Antriebsflansch 22 für den Läufer 28 der Wirbelstromkupplung 7 dient. Die Reibung des inneren Kugellagers 21 bewirkt demnach eine Mitnahme des Läufers 28 und damit des Permanentmagneten 30 und des damit verbundenen Lüfterrads 2. Diese Drehzahl beträgt beispielsweise ca. 80 bis 100 U/Min. Diese niedrige Drehzahl reicht oft aus, um ein gewisses Mindestmaß an Kühlung für die elektronischen Bauelemente zu erzeugen.

Reicht diese Kühlung nicht aus, so kann über die zweite elektromagnetische Reibscheibenkupplung (6) durch Stromzufuhr zur Erregerwicklung 11 der Ankerring 18 an den mit Motordrehzahl umlaufenden Rotor 8 angezogen werden, wodurch sich der mit dem Ankerring 18 verbundene Zwischenring 22 als Antriebsflansch ebenfalls mit Motordrehzahl dreht und diese über den Anschlußflansch 27 an den Läufer 28 der Wirbelstromkupplung 7 weitergibt. Der Läufer 28 dreht sich damit ebenfalls mit der Motordrehzahl der Antriebswelle 5.

Die Wirbelstromkupplung 7 ist in bekannter Weise derart ausgebildet, daß sie lediglich eine Schleppdrehzahl für das Lüfterrad 2 erzeugt, die in der Größenordnung von ca. maximal 1100 U/Min. liegt. Dabei ist es wichtig, daß eine sanfte und damit nicht merkliche oder ruckartige Beschleunigung des Lüfterrads 2 einsetzt. Die Vorteile dieser Handhabung sind in der DE 32 03 143 beschrieben.

Die dritte Einstellmöglichkeit der erfindungsgemäßen Reibscheibenkupplung 1 besteht darin, daß die Motordrehzahl der Antriebswelle 5 über die einzuschaltende erste elektromagnetische Reibscheibenkupplung 4 direkt auf das Lüfterrad 2 übertragen wird. Hierzu wird die Erregerwicklung 10 mit Strom beaufschlagt, wodurch der Ankerring 15 gegen den umlaufenden Läufer 8 gezogen und damit die Lüfterradnabe 17 und das Lüfterrad 2 auf Motordrehzahl gebracht wird.

Die erfindungsgemäße Ausbildung des Stufenkugellagers 19 mit einem als Antriebsflansch ausgebildeten Zwischenring 22 für den Antrieb der Wirbelstromkupplung 7 ermöglicht eine äußerst kompakte Bauweise der Reibscheibenkupplung 1. Dabei ist das radial innenliegende Kugellager 21 sowie das radial außenliegende Kugellager 23 als zweireihiges Schrägkugellager ausgebildet, um sowohl axiale als auch radiale Kräfte aufzunehmen. Der Zwischenring 22 des aus einer Einheit gebildeten Stufenkugellagers 19 dient zugleich als Antriebsflansch 22 für die Wirbelstromkupplung 7. Herstellungstoleranzen brauchen lediglich nur noch im Bereich der Antriebswelle 5 und der Lüfterradnabe 17 beachtet zu werden, wobei eine erhebliche Vereinfachung in der Fertigung, insbesondere auch durch den Verzicht eines zusätzlichen Zwischenflansches, der die Funktion des Antriebsflansches 22 hat, erzielt wird.

Die Verwendung eines einstückigen, angepaßten Stufenkugellagers bringt demnach erhebliche Kosten- und Gewichtseinsparungen, garantieren einen einfachen Ein- und Ausbau der Einzelteile und vereinfachen die erfindungsgemäße Reibscheibenkupplung wesentlich.

**Patentansprüche**

1. Elektromagnetisch betätigbare Reibscheibenkupplung (1) für ein Lüfterrad (2) eines Ventilators (3), insbesondere von Kraftfahrzeug-Verbrennungsmotoren, wobei das Lüfterrad (2) über eine erste elektromagnetische Reibscheibenkupplung (4) direkt mit der Antriebswelle (5) verbunden und auf Motordrehzahl, und bei nicht geschalteter erster Reibscheibenkupplung (4) über eine, mittels einer zweiten Reibscheibenkupplung (6) schaltbaren Wirbelstromkupplung (7) auf eine niedrigere Schleppdrehzahl antreibbar ist, und wobei das Läuferrad (28) der Wirbelstromkupplung (7) bei nicht geschalteter erster (4) und zweiter (6) Reibscheibenkupplung über die Reibung eines, auf der Antriebswelle (5) angeordneten Kugellagers (19) antreibbar ist, dadurch gekennzeichnet, daß das Kugellager (19) auf der Antriebswelle (5) als einstückiges Stufenkugellager (19) ausgebildet ist, mit einem inneren, auf der Antriebswelle (5) sitzenden Innenring (20), einem zwischen radial innenliegenden (21) und radial außenliegenden (23) Kugeln angeordneten, einstückigen, einen Außen- und Innenring bildenden Zwischenring (22) und einem, die radial außenliegenden Kugeln (23) umgebenden Außenring (24), und daß die zweite Reibscheibenkupplung (6) die Wirbelstromkupplung (7) über den als Antriebsflansch ausgebildeten Zwischenring (22) des Stufenkugellagers (19) antreibt.

2. Reibscheibenkupplung nach Anspruch 1, dadurch gekennzeichnet, daß das Stufenkugellager (19) aus zwei übereinanderliegenden, zweireihigen Schrägkugellagern (21, 23) besteht, wobei der einteilige Zwischenring (22) den Außenring des radial innenliegenden (21) und den Innenring des radial außenliegenden (23) Schrägkugellagers (21, 23) bildet.

3. Reibscheibenkupplung nach Anspruch 1 oder 2, dadurch gekennzeichnet, daß der Zwischenring (22) des Stufenkugellagers (19) einerseits mit dem Ankerring (18) der zweiten elektromagnetischen Reibscheibenkupplung (6), andererseits mit dem Läufer (28) der Wirbelstromkupplung (7) verbunden ist und daß der Permanentmagnet (30) der Wirbelstromkupplung (7) über die Lüfterradnabe (17) mit dem Außenring (24) des Stufenkugellagers (19) verbunden ist.

4. Reibscheibenkupplung nach einem oder mehreren der vorhergehenden Ansprüche, dadurch gekennzeichnet, daß die Motordrehzahl über die Antriebswelle (5) auf die erste elektromagnetische Reibscheibenkupplung (4) übertragbar ist, wobei der Ankerring (15) mit der Lüfterradnabe (17) verbunden ist.

## Claims

1. Electromagnetically operated friction disc coupling (1) for a fan wheel (2) of a fan (3), in particular of motor vehicle internal combustion engines, the fan wheel (2) being connected by way of a first electromagnetic friction disc coupling (4) directly to the drive shaft (5) and can be driven at engine speed and when the first friction disc coupling (4) is not actuated, can be driven at a lower trailing speed by way of an eddy-current coupling (7) which can be operated by means of a second friction disc coupling (6), and when the first friction disc coupling (4) and second friction disc coupling (6) are inoperative, the rotor wheel (28) of the eddy-current coupling (7) being able to be driven by the friction of a ball bearing (19) located on the drive shaft (5), characterised in that the ball bearing (19) on the drive shaft (5) is constructed as a one-piece stepped ball bearing (19), with an internal inner ring (20) seated on the drive shaft (5), a one-piece intermediate ring (22), forming an outer and inner ring, located between radially internal balls (21) and radially external balls (23) and an outer ring (24) surrounding the radially external balls (23), and that the second friction disc coupling (6) drives the eddy-current coupling (7) by way of the intermediate ring (22) of the stepped ball bearing (19) constructed as a drive flange.

2. Friction disc coupling according to Claim 1, characterised in that the stepped ball bearing (19) consists of two angular contact ball bearings (21, 23) in two rows, lying one above the other, the one-piece intermediate ring (22) forming the outer ring of the radially internal angular contact ball bearing (21) and the inner ring of the radially external angular contact ball bearing (23).

3. Friction disc coupling according to Claim 1 or 2, characterised in that the intermediate ring (22) of the stepped ball bearing (19) is connected on one side to the armature ring (18) of the second electromagnetic friction disc coupling (6), on the other side to the rotor (28) of the eddy-current coupling (7) and that the permanent magnet (30) of the eddy-current coupling (7) is connected by way of the fan wheel hub (17) to the outer ring (24) of the stepped ball bearing (19).

4. Friction disc coupling according to one or more of the preceding Claims, characterised in that the engine speed can be transmitted by way of the drive shaft (5) to the first electromagnetic friction disc coupling (4), the armature ring (15) being connected to the fan wheel hub (17).

## Revendications

1. Embrayage (1) à disque de friction actionné électromagnétiquement pour la roue (2) d'un ventilateur (3), en particulier de moteurs à combustion interne de véhicules automobiles, la roue (2) du ventilateur étant reliée directement, par un premier embrayage électromagnétique à disque de friction (4), à l'arbre d'entraînement (5) et pouvant être entraînée à la vitesse du moteur, et, lorsque le premier embrayage à disque de friction (4) n'est pas en service, ladite roue pouvant être entraînée, par l'intermédiaire d'un embrayage à courants de Foucault (7), commutable au moyen d'un second embrayage à disque de friction (6), à une vitesse réduite, et le rotor (28) de l'embrayage à courants de Foucault (7), lorsque les premier (4) et second (6) embrayages à disque de friction ne sont pas en service, pouvant être entraîné par la friction d'un roulement à billes (19) agencé sur l'arbre d'entraînement (5),
caractérisé en ce que le roulement à billes (19) sur l'arbre d'entraînement (5) est réalisé en tant que roulement à billes (19) étagé en une pièce, comportant une bague interne (20) s'appuyant sur l'arbre d'entraînement (5), une bague intermédiaire (22), formant une bague interne et une bague externe, en une pièce, agencée entre des billes radialement internes (21) et radialement externes (23), et une bague externe (24) entourant les billes radialement externes (23), et en ce que le second embrayage à disque de friction (6) entraîne l'embrayage à courants de Foucault (7) par l'intermédiaire de la bague intermédiaire (22), réalisée en tant que bride d'entraînement, du roulement à billes étagé (19).

2. Embayage à disque de friction selon la revendication 1,
caractérisé en ce que le roulement à billes étagé (19) est constitué de deux roulements à billes à disposition oblique (21, 23) à deux rangées, agencés l'un au-dessus de l'autre, la bague intermédiaire (22) en une pièce formant la bague externe du roulement à billes (21) radialement interne, et la bague interne du roulement à billes (23) radialement externe.

3. Embrayage à disque de friction selon la revendication 1 ou 2,
caractérisé en ce que la bague intermédiaire (22) du roulement à billes étagé (19) est reliée, d'une part, à la bague d'induit (18) du second embrayage électromagnétique à disque de friction (6), et, d'autre part, au rotor (28) de l'embrayage à courants de Foucault (7), et en ce que l'aimant permanent (30) de l'embrayage à courants de Foucault (7) est relié, par l'intermédiaire du moyeu (17) de la roue du ventilateur, à la bague externe (24) du roulement à billes étagé (19).

4. Embrayage à disque de friction selon une ou plusieurs des revendications précédentes, caractérisé en ce que la vitesse du moteur peut être transmise, par l'intermédiaire de l'arbre d'entraînement (5), au premier embrayage électromagnétique à disque de friction (4), la bague d'induit (15) étant reliée au moyeu (17) de la roue du ventilateur.